# EUROPÄISCHE PATENTSCHRIFT

(11) **EP 1 303 797 B1**
(45) Veröffentlichungstag und Bekanntmachung des Hinweises auf die Patenterteilung: **23.05.2007**
(21) Anmeldenummer: 00949399.0
(22) Anmeldetag: 22.07.2000
(51) Int. Cl.: G05B 17/00

(54) **SYSTEM ZUR UNTERSTÜTZUNG EINER FEHLERURSACHENANALYSE**
SYSTEM FOR SUPPORT OF AN ERROR CAUSE ANALYSIS
SYSTEME DE SUPPORT D'UNE ANALYSE DE CAUSE D'ERREUR

(43) Veröffentlichungstag der Anmeldung: 23.04.2003
(73) Patentinhaber: ABB RESEARCH LTD., 8050 Zürich (CH)
(72) Erfinder: VOLLMAR, Gerhard, D-67149 Meckenheim (DE); HU, Zaijun, D-67061 Ludwigshafen (DE); KALLELA, Jari, 02130 Espoo (FI); GREULICH, Manuel, 77709 Oberwolfach (DE)
(74) Vertreter: Miller, Toivo
(86) Internationale Anmeldenummer: PCT/EP2000/007058
(87) Internationale Veröffentlichungsnummer: WO 2002/007495

(56) Entgegenhaltungen:
- EP-A- 0 377 736
- EP-A- 0 482 523
- US-A- 5 127 005
- D.JURICIC ET AL: "GENERATION OF FAULT TREES BY MEANS OF SIMPLIFIED PROCESS MODELS AND MACHINE LEARNING" A POSTPRINT VOLUME FROM THE IFAC/IMACS WORKSHOP ,ARTIFICIAL INTELLIGENCE IN REAL TIME CONTROL 1995 , 29. November 1995 (1995-11-29), Seiten 31-36, XP000949472 UK

## Beschreibung

Die Erfindung bezieht sich auf ein System zur Unterstützung einer Fehlerursachenanalyse im Fall eines Fehlerereignisses in einer industriellen Anlage.

Zur Unterstützung des Service-Personals bei der Suche nach der Ursache für ein im Betrieb einer technischen Anlage eingetretenen Fehlerereignisses können Fehlermodelle erarbeitet und zur Fehleranalyse herangezogen werden. Die Struktur solcher Fehlermodelle wird auch als Fehlerbaum bezeichnet.

Modelle zur Fehlerursachenanalyse können gemäß unterschiedlicher bekannter Methoden und Techniken entwickelt werden, wie FMEA (Failure Modes and Effects Analysis), oder Fehlerbaumanalyse [John Moubray, RCM2, Butterworth-Heinemann, Second Edition 1997]. Allerdings sind die Ergebnisse einer Fehlerursachenanalyse mit solchen Modellen oftmals unzureichend dokumentiert; wenn überhaupt in elektronischer Form, dann meistens als EXCEL-Tabellen, oder als Graphiken in Power Point. Außerdem ist nachteilig, daß nur die Ergebnisse des Analysevorgangs dokumentiert werden. Eine Verwendung der Ergebnisse für die Analyse von Fehlerursachen in ähnlichen Problemfällen wird nur unzureichend unterstützt. Um vorhandene Erfahrungen einer Wiederverwendung zugänglich zu machen, müßten diese Werkzeuge Modellbibliotheken mit Suchfunktionen unterstützen. Heutige Suchmaschinen implementieren aber lediglich eine Suche nach Texten. Komfortable Werkzeuge lassen immerhin eine Verknüpfung mit Boolschen Operatoren zu. Dennoch liefern Suchanfragen auch dabei unbefriedigende Ergebnisse. Häufig ist die Liste der Treffer sehr umfangreich oder potentielle Treffer werden nicht erkannt, weil der reine Textvergleich ein negatives Ergebnis liefert.

Der Erfindung liegt die Aufgabe zugrunde, ein System anzugeben, das eine verbesserte Unterstützung einer Fehlerursachenanalyse bietet.

Diese Aufgabe wird durch ein System zur Unterstützung der Fehlerursachenanalyse gelöst, das die im Anspruch 1 angegebenen Merkmale aufweist. Vorteilhafte Ausgestaltungen sind in weiteren Ansprüchen angegeben.

Das System ermöglicht die Suche und Fokussierung in hierarchisch strukturierten XML-basierten Ursache/Wirkungsmodellen. Ein Arbeiten mit diesem System erleichtert es, für eine gegebene Problembeschreibung das passende Modell zu finden, und im Modell der eigentlichen Fehlerursache möglichst nahe zu kommen.

Die erfindungsgemäße Implementierung der Modelle für die Fehlerursachenanalyse in XML erlaubt eine flexible und tiefe Strukturierung von Information. Die XML-Datenstrukturen werden so gewählt, daß ein schneller Zugriff auf die benötigten Informationsinhalte möglich wird. Dazu sind die Modelle in Kategorien unterteilt und eine hinterlegte Prozeß- und Komponentenhierarchie ist auf die Modelle abgebildet. Weiterhin sind Fehlereffekte kategorisiert und einheitlich beschrieben. Zur Auswertung von Suchanfragen wird ein Verfahren verwendet, das ein aus der Literatur bekanntes Suchverfahren, beispielsweise Cosinus-Retrieval [G. SALTON, The SMART Retrieval System - Experiment in Automatic Document Processing, Prentice-Hall, Englewood Cliffs, New Jersey, 1971] um die systematische Verwendung anwendungsspezifischer Informationsstrukturen, wie Modellkategorie, Prozeß- und Komponentenhierarchie und Fehlereffektkategorien erweitert.

Weitere Systeme zur Fehlerursachenanalyse sind aus den Schriften EP 0 377 736, EP 0 482 523 und US 5 127 005 bekannt.

Eine weitere Beschreibung der Erfindung und deren Vorteile erfolgt nachstehend anhand von Ausführungsbeispielen, die in Zeichnungsfiguren dargestellt sind.

Es zeigen:
- Fig. 1: das Blockschema eines erfindungsgemäßen Systems zur Unterstützung einer Fehlerursachenanalyse,
- Fig. 2: eine Darstellung der Arbeitsweise des Systems,
- Fig. 3: eine prinzipielle Darstellung eines Fehlermodells,
- Fig. 4: eine Darstellung zur Kategorisierung der Fehlermodelle,
- Fig. 5: wesentliche Inhalte einer Fehlerhypothese,
- Fig. 6: aufeinander zuweisende Fehlermodelle, und
- Fig. 7: einen Fehlerpfad.

Das vorgeschlagene System kann lokal in einem Rechner implementiert sein und genutzt werden. Bevorzugt wird jedoch eine Implementierung im Internet, weil dann auf einfache Weise eine weltweite Nutzung für Service-Zwecke möglich ist.

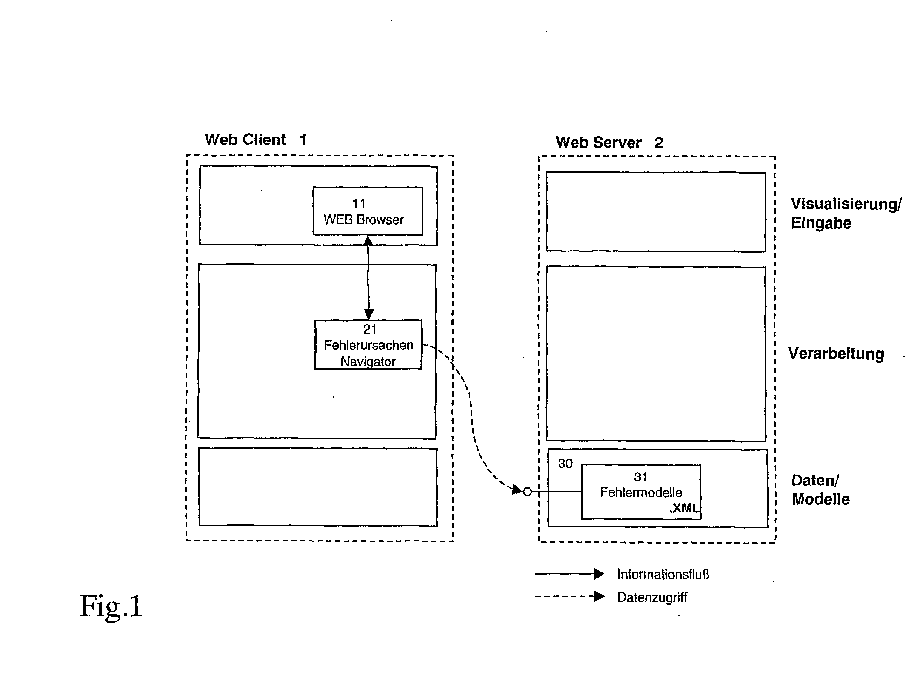

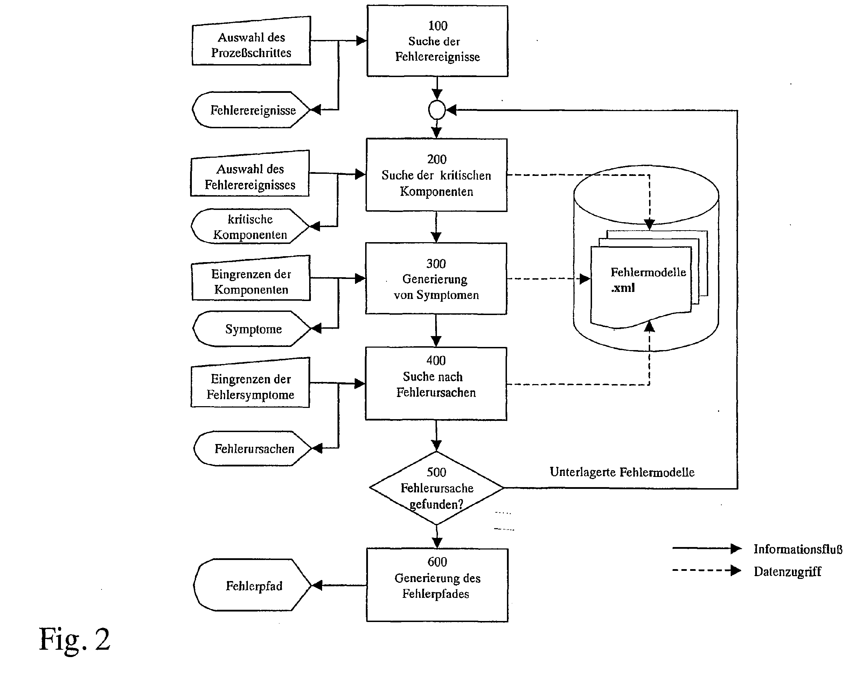

Fig. 1 zeigt das System zur Fehlerursachenanalyse mit zwei System-Komponenten Web Client 1 und Web Server 2. Fehlermodelle sind als XML-Dateien in einem Fehlermodell-Speicher 31 im Web Server 2 gespeichert und werden mittels dessen Datenverarbeitungseinrichtung 30 verwaltet. Ein Benutzer hat über eine Bedien- und Anzeigeeinrichtung 11 mit Web Browser, sowie einen Fehlerursachen-Navigator 21 des Web Client 1 Zugriff auf die Modelle. Der Fehlerursachen-Navigator 21 arbeitet auf der Basis des anhand der Fig. 2 erläuterten Verfahrens.

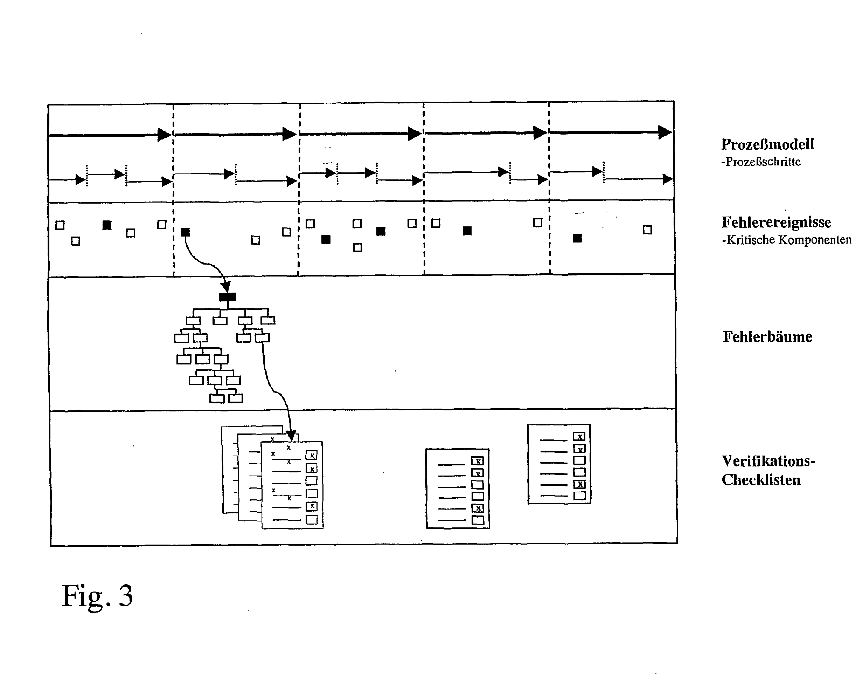

Fig. 2 zeigt ein Ablaufdiagramm für das Verfahren zum Suchen und Fokussieren in XML-basierten Modellen zur Fehlerursachenanalyse. Bevor die Suche beginnt, muß der Benutzer in einem ersten Schritt 100 über die Web Browser-Oberfläche der Bedien- und Anzeigeeinrichtung 11 in einem gespeicherten Fehlermodell (vergl. Fig. 3) zu dem betroffenen Prozeßschritt navigieren. Ihm wird daraufhin eine Liste mit Ereignissen präsentiert, die im gewählten Prozeßschritt auftreten können.

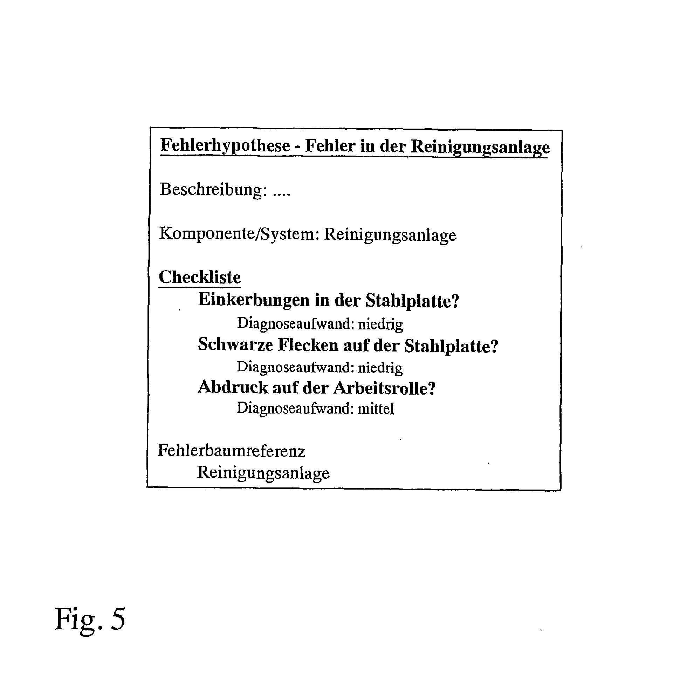

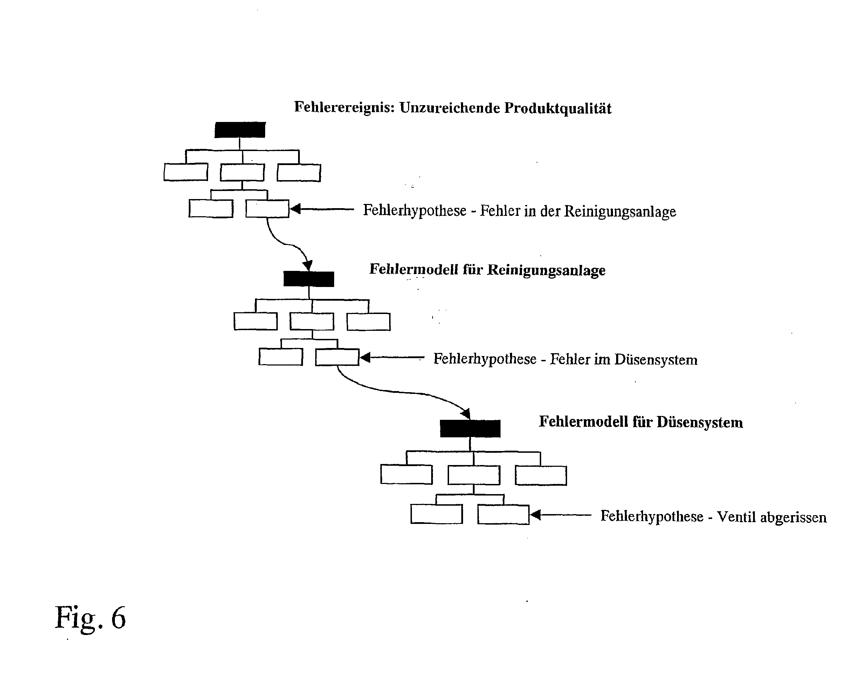

Der Benutzer wählt das zutreffende Fehlerereignis aus. In einem zweiten Suchschritt 200 sucht das System zu diesem Ereignis korrespondierende kritische Anlagenkomponenten oder Anlagensysteme auf und zeigt sie an. Ein Fehlerereignis entspricht jeweils dem obersten Knoten eines Fehlerbaumes (vergl. Fig. 3 und 6). Die nachfolgenden Ebenen des Fehlerbaumes beschreiben Fehlerhypothesen; die Inhalte einer Fehlerhypothese sind am Beispiel ,Fehler in einer Reinigungsanlage' in Fig. 5 zu sehen. Im Schritt 200 werden also zur weiteren Unterstützung der Fehlerursachenanalyse aus der ersten Ebene der Fehlerhypothesen zu jeder Hypothese (Fig. 5) Komponenten bzw. Anlagensysteme gesammelt und dem Benutzer als kritische Komponenten aufbereitet visualisiert.

Bevor in einem dritten Schritt 300 weiter fokusiert wird, grenzt der Benutzer anhand der angezeigten Liste die möglichen Fehlerkandidaten ein. Im Schritt 300 wird die so eingegrenzte Menge von Fehlerhypothesen vom System weiter untersucht. Der Navigator 21 durchsucht dazu jede zugehörige Checkliste (vergl. Fig. 5) nach offensichtlichen Symptomen. Offensichtliche Symptome sind alle diejenigen, deren Diagnoseaufwand niedrig ist. Sämtliche in Frage kommenden Symptome werden dem Benutzer zur Auswahl gestellt. Der Benutzer kann nun die Symptome auswählen, die sich in dem speziellen Fall zeigen.

In einem vierten Schritt 400 wird dann anhand der vorliegenden Symptomauswahl in sämtliche Hypothesen nach der wahrscheinlichsten Fehlerursache gesucht und dem Benutzer wenigstens eine Fehlerhypothese als wahrscheinliche Fehlerursache angezeigt.

In einem Abfrageschritt 500 kann der Benutzer bestätigen, daß eine vom System aufgezeigte und gegebenenfalls von ihm ausgewählte wahrscheinliche Fehlerursache zutreffend ist. Daraufhin generiert das System in einem weiteren Schritt 600 einen zur Fehlerursache korrespondierenden Fehlerpfad und zeigt diesen an.

Gibt der Benutzer als Antwort auf die Abfrage 500 ein, daß keine der gefundenen Fehlerursachen zutreffend sei, so werden die zweiten bis vierten Schritte erneut durchlaufen, wobei jeweils tiefere Ebenen der hierarchischen Ursache/Wirkungsmodelle durchsucht werden.

Fig. 3 zeigt die prinzipielle Darstellung eines Fehlermodells. Die oberste Ebene beinhaltet ein Prozeßmodell mit mehreren Prozeßschritten. Jeder Prozeßschritt kann in weitere Prozeßschritten untergliedert werden. Zu jedem Prozeßschritt gibt es Fehlerereignisse und kritische Komponenten.

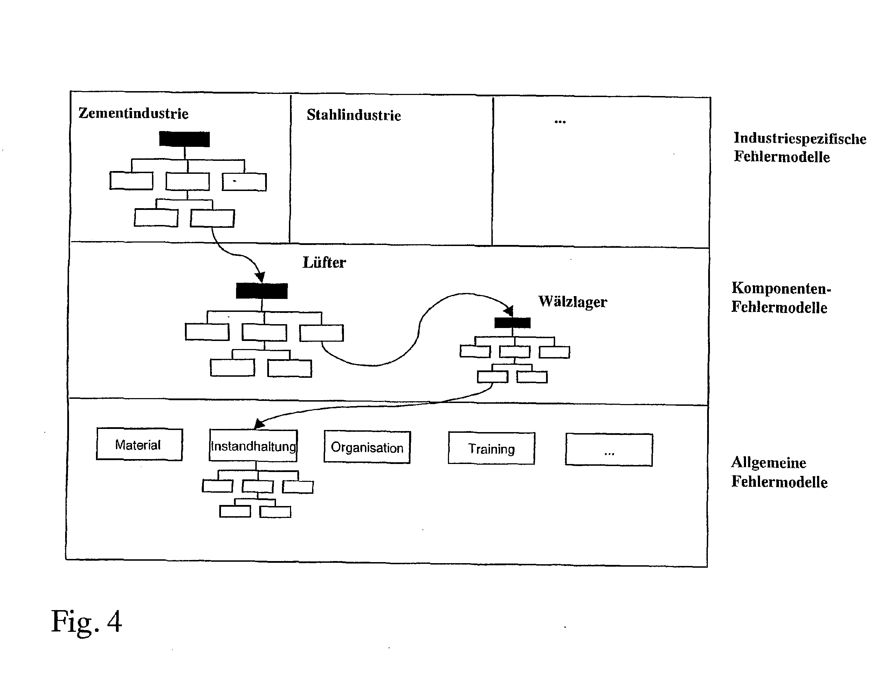

Die nächsttiefere Ebene im Modell beinhaltet Fehlerbäume. Fehlerbäume sind kategorisiert, wie in Fig. 4 zu sehen ist. Ein Fehlerbaum kann sich aus mehreren Teilbäumen zusammensetzen. Dies wird in Fig. 4 durch die Pfeile angedeutet und anhand der Fig. 6 näher erläutert.

Die Knoten eines Fehlerbaumes repräsentieren Fehlerhypothesen. Wesentlicher inhaltlicher Bestandteil einer Fehlerhypothese ist eine Checkliste zur Verifikation. Auf die Inhalte einer Hypothese wird in Fig. 5 näher eingegangen.

Fig. 4 zeigt die Kategorisierung der Fehlermodelle. Die dazu erstellten industriespezifischen Fehlermodelle sind jeweils typisch für eine bestimmte Industrie, wie beispielsweise Fehlermodelle für die Zementindustrie oder Fehlermodelle für die Stahlindustrie. Diese Kategorie der Fehlermodelle hat als obersten Knoten das Fehlerereignis. Ein Fehlerereignis ist ein unerwünschter Zustand, der die Produktion beeinträchtigt.

Eine zweite Kategorie gemäß Fig. 4 beschreibt Komponentenfehler. Diese Modelle sind allgemeingültiger, sind also in unterschiedlichen Industrien anwendbar. Typischerweise verweisen Hypothesen der industriespezifischen Fehlermodelle auf Komponentenfehlermodelle.

Die dritte Kategorie der Fehlermodelle beschreibt sehr allgemeingültige Fehlerzusammenhänge. Solche Fehler haben beispielsweise ihre Ursachen in unzureichendem Training der Mitarbeiter, organisatorischen Mißständen oder Problemen in der Instandhaltung. Diese Modelle sind den industriespezifischen Fehlermodellen und den Komponentenfehlermodellen unterlagert.

Fig. 5 zeigt die wesentlichen Inhalte einer Fehlerhypothese am Beispiel einer Reinigungsanlage von Stahlplatten. Die Hypothese enthält eine Beschreibung der Fehlerzusammenhänge. Außerdem sind der Hypothese jeweils betroffene Komponenten oder Anlagensysteme zugeordnet. Eine Checkliste beschreibt jeweils Kriterien, wie die Hypothese verifiziert werden kann. Zu jedem Kriterium ist der Aufwand für die Diagnose mit angegeben. Der Hypothese können komplexe eigenständige Fehlerbäume unterlagert sein. Dieser Verweis steht in der Fehlerbaumreferenz.

Fig. 6 zeigt am Fehlerereignis-Beispiel ,Unzureichende Produktqualität' , wie Fehlerbäume aufeinander verweisen und wie auf diese Weise komplexe und umfangreiche Fehlerzusammenhänge modelliert werden können.

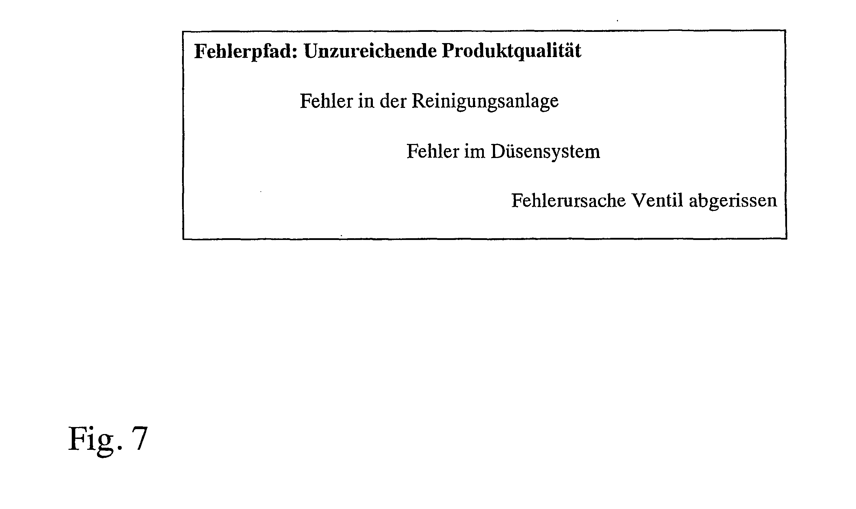

Fig. 7 zeigt einen Fehlerpfad aus dem in Fig. 6 dargestellten Beispiel. Solch ein Fehlerpfad ist das Ergebnis des beschriebenen Verfahrens zum Suchen und Fokussieren in XML-basierten Modellen zur Fehlerursachenanalyse.

## Patentansprüche

1. System zur Unterstützung einer Fehlerursachenanalyse im Fall eines Fehlerereignisses in einer industriellen Anlage, wobei
a) eine Datenverarbeitungseinrichtung (30) mit einem Fehlermodell-Speicher (31) vorhanden ist,
b) im Fehlermodell-Speicher (31) wenigstens ein, in Form von XML-Dateien realisiertes hierarchisch strukturiertes Ursache/Wirkungsmodell (Fehlermodell) gespeichert ist, auf das mittels eines Fehlerursachen-Navigators (21) und einer Bedien- und Anzeigeeinrichtung (11) eine Zugriffsmöglichkeit besteht,
c) jedes gespeicherte Ursache/Wirkungsmodell enthält:
- ein in Prozeßschritte gegliedertes industriespezifisches Prozeßmodell,
- jeweiligen Prozeßschritten, sowie dafür benötigten Anlagenkomponenten oder Anlagensystemen zugeordnete definierte Fehlerereignisse,
- Fehlerereignissen zugeordnete Fehlerbäume mit Fehlerhypothesen, wobei den Fehlerhypothesen jeweils eine Checkliste mit Symptomen zur Verifizierung der Fehlerhypothese zugeordnet ist, und
d) das System dafür eingerichtet ist,
- einem Benutzer mittels der Bedien- und Anzeigeeinrichtung (11) und des Fehlerursachen-Navigators (21) in einem ersten Suchschritt (100) zu ermöglichen, zum betroffenen Prozeßschritt im Prozeßmodell zu navigieren, und dem Benutzer eine Fehlerereignisliste zu präsentieren,
- nach Auswahl eines Fehlerereignisses durch den Benutzer, in einem zweiten Suchschritt (200) zu diesem Ereignis korrespondierende kritische Anlagenkomponenten oder Anlagensysteme aufzufinden und anzuzeigen,
- nach Auswahl wenigstens einer der kritischen Komponenten oder Systeme, in einem dritten Suchschritt (300) mögliche Symptome zu generieren und in einer Checkliste anzuzeigen, und
- nach Auswahl wenigstens eines Symptoms als wahrscheinliches Symptom, in einem vierten Schritt (400) in den Fehlerbäumen enthaltene Hypothesen möglicher Fehlerursachen aufzufinden und anzuzeigen.

2. System nach Anspruch 1, **dadurch gekennzeichnet, daß** es dafür eingerichtet ist,
- dem Benutzer in einem an den vierten Schritt (400) sich anschließenden Abfrageschritt (500) zu ermöglichen, eine der angezeigten Hypothesen als tatsächliche Fehlerursache zu bestätigen, oder zu markieren, daß sich keine der Hypothesen bestätigt hat, und
- falls eine Hypothese als zutreffend bestätigt ist, in einem weiteren Schritt (600) einen Fehlerpfad zu generieren und auszugeben, oder
- falls keine Hypothese als zutreffend bestätigt ist, in einem erneuten Durchlauf der zweiten bis vierten Schritte (200, 300, 400) in jeweils tieferen Ebenen des hierarchischen Ursache/Wirkungsmodells andere Hypothesen aufzufinden und anzuzeigen und jeweils den Abfrageschritt (500) anzuschließen.

3. System nach Anspruch 1 oder 2, **dadurch gekennzeichnet, daß** die Datenverarbeitungseinrichtung (30) einschließlich Fehlermodell-Speicher (31) Teil eines Web Servers (2) ist, der die XML-Dateien verwaltet, und die Bedien- und Anzeigeeinrichtung (11), sowie der Fehlerursachen-Navigator (21) als Web Client (1) ausgeführt sind, wodurch ein Benutzer über einen Web Browser und den Navigator (21) Zugriff auf das wenigstens eine Ursache/Wirkungsmodell hat.

## Claims

1. A system for supporting a fault cause analysis in the event of a fault in an industrial facility, with
a) a data processing device (30) with a fault model memory (31) being present;
b) at least one hierarchically structured cause/effect model (fault model) realized in the form of XML files being stored in the fault model memory (31), to which there is an access possibility by means of a fault cause navigator (31) and an operating and display device (11);
c) each stored cause/effect model containing:
- an industry-specific process model broken down into process steps;
- the respective process steps and defined fault events assigned to the plant components or plant systems required for this purpose;
- fault trees assigned to the fault events with fault hypotheses, with the fault hypotheses each being assigned a checklist with symptoms for verifying the fault hypothesis, and
d) the system being set up
- to enable a user by means of the operating and display device (11) and the fault cause navigator (21) in a first search step to navigate to the affected process step in the process model and to present the user with a list of fault events ;
- to find and display critical plant components or plant systems corresponding to said event in a second search step (200) after the selection of a fault event by the user;
- to generate possible symptoms in a third search step (300) after the selection of at least one of the critical components or systems and to display the same in a checklist,
- to find and display hypotheses of possible fault causes as contained in the fault trees in a fourth step (400) after the selection of at least one symptom as a probable symptom.

2. A system according to claim 1, **characterized in that** it is set up
- to enable the user in a query step (500) following the fourth step (400) to confirm one of the indicated hypotheses as the actual cause of the fault, or to mark that none of the hypotheses was confirmed, and
- to generate or output a fault path in a further step (600) if one of the hypotheses is confirmed to be true, or
- to find and display other hypotheses in a renewed passage of the second to fourth step (200, 300, 400) in respectively deeper levels of the hierarchical cause/effect model if no hypothesis has been confirmed as correct and to follow this by the query step (500).

3. A system according to claim 1 or 2, **characterized in that** the data processing device (30), including the fault model memory (31), is a part of a webserver (2) which manages the XML files, and the operating and display device (11) and the fault cause navigator (21) are arranged as web client (1), through which a user has access via a web browser and the navigator (21) to the at least one cause/effect model.

## Revendications

1. Système d'assistance d'une analyse des causes d'erreurs dans le cas d'une erreur dans une installation industrielle,
a) un dispositif de traitement de données (30) avec une mémoire (31) de modèles d'erreur étant prévu,
b) au moins un modèle cause/effet (modèle d'erreur) à structure hiérarchique réalisé sous forme de fichiers XML étant mis en mémoire dans la mémoire (31) de modèles d'erreur et étant accessible moyennant un navigateur (21) pour les causes d'erreurs et un dispositif d'opération et d'affichage (11),
c) chaque modèle cause/effet mis en mémoire contient:
- un modèle de processus spécifique à l'industrie et structuré en étapes du processus,
- des erreurs définies associées à des étapes respectives du processus ainsi qu'à des composantes ou des systèmes de l'installation nécessaires à celui-ci,
- des arbres d'erreur avec des hypothèses d'erreur associés aux erreurs, une liste de symptômes permettant de vérifier l'hypothèse d'erreur étant associée aux hypothèses d'erreur, et
d) le système étant conçu
- pour permettre à un utilisateur, moyennant le dispositif d'opération et d'affichage (11) et le navigateur (21) pour les causes d'erreurs, de naviguer dans une première étape de recherche (100) jusqu'à l'étape du processus concerné dans le modèle du processus et pour présenter à l'utilisateur une liste d'erreurs,
- pour trouver, dans une deuxième étape de recherche (200), des composants ou systèmes critiques de l'installation correspondant à l'erreur et pour les afficher une fois que cette erreur a été sélectionnée par l'utilisateur,
- pour générer, dans une troisième étape de recherche (300), des symptômes possibles et en afficher une liste une fois qu'au moins un des composants ou systèmes critiques a été sélectionné, et
- pour trouver et afficher des hypothèses de causes d'erreurs possibles contenues dans les arbres d'erreurs dans une quatrième étape (400), une fois qu'au moins un symptôme a été sélectionné comme symptôme probable.

2. Système selon la revendication 1, **caractérisé en ce qu'**il est conçu:
- pour permettre à l'utilisateur, dans une étape d'interrogation (500) faisant suite à la quatrième étape (400), de confirmer l'une des hypothèses affichées comme étant la cause réelle de l'erreur ou de marquer qu'aucune des hypothèses n'a pu être confirmée, et
- pour générer et délivrer dans une prochaine étape (600) un chemin d'erreur si une hypothèse a été confirmée pertinente, ou
- pour trouver, dans des plans toujours plus profonds du modèle cause/effet hiérarchique, d'autres hypothèses et les afficher en répétant les étapes deux à quatre (200, 300, 400) si aucune des hypothèses n'a été confirmée pertinente et pour exécuter ensuite l'étape d'interrogation (500).

3. Système selon la revendication 1 ou 2, **caractérisé en ce que** le dispositif de traitement de données (30), qui comprend la mémoire (31) de modèles d'erreurs, fait partie d'un serveur Web (2) qui gère les fichiers XML et que le dispositif d'opération et d'affichage (11) ainsi que le navigateur (21) pour les causes d'erreurs sont réalisés sous forme de client Web (1), de sorte qu'un utilisateur peut accéder à au moins un modèle cause/effet par l'intermédiaire d'un logiciel de navigation Web et du navigateur (21).
